# EUROPÄISCHE PATENTSCHRIFT

(11) **EP 3 363 994 B1**
(45) Veröffentlichungstag und Bekanntmachung des Hinweises auf die Patenterteilung: **30.10.2019**
(21) Anmeldenummer: 17156720.9
(22) Anmeldetag: 17.02.2017
(51) Int. Cl.: F01D 9/04, F01D 11/00, F16J 15/02

(54) **DICHTUNGSANORDNUNG FÜR EINE GASTURBINE**
SEAL ASSEMBLY FOR A GAS TURBINE
AGENCEMENT D'ÉTANCHÉITÉ POUR UNE TURBINE À GAZ

(43) Veröffentlichungstag der Anmeldung: 22.08.2018
(73) Patentinhaber: MTU Aero Engines AG, 80995 München (DE)
(72) Erfinder: Böck, Alexander, 82288 Kottgeisering (DE)

(56) Entgegenhaltungen:
- EP-A1- 2 851 518
- EP-A1- 3 085 904
- US-A1- 2009 079 139

## Beschreibung

Die vorliegende Erfindung betrifft eine Dichtungsanordnung umfassend: ein erstes Bauteil und ein zweites Bauteil, wobei das erste Bauteil einen ersten Begrenzungsabschnitt mit einem ersten Überlappungsabschnitt aufweist und einen mit dem Begrenzungsabschnitt verbundenen und von diesem abstehenden ersten Befestigungsabschnitt, wobei das zweite Bauteil einen zweiten Begrenzungsabschnitt mit einem zweiten Überlappungsabschnitt aufweist und einen mit dem Begrenzungsabschnitt verbundenen und von diesem abstehenden zweiten Befestigungsabschnitt, wobei der erste Überlappungsabschnitt und der zweite Überlappungsabschnitt wenigstens teilweise überlappend angeordnet sind, derart dass der erste Begrenzungsabschnitt und der zweite Begrenzungsabschnitt eine im Wesentlichen durchgängige Begrenzungsfläche bilden, wobei zwischen dem ersten Befestigungsabschnitt und dem zweiten Befestigungsabschnitt ein Abstand vorgesehen ist, der durch wenigstens ein Dichtungselement wenigstens teilweise abgedichtet wird.

Derartige Dichtungsanordnungen kommen insbesondere bei Gasturbinen, vorzugsweise bei Turbinenzwischengehäusen von Gasturbinen zum Einsatz. Bisher wurden Dichtungsanordnungen an sogenannt geschliffenen Überlappungen von zwei Metallbauteilen mittels einer Federdichtung (feather seal) realisiert. Hierzu waren in den benachbarten, überlappenden Bauteilen schlitzförmige Sackbohrungen vorgesehen, die beispielsweise durch Senkerodieren hergestellt werden. Das Herstellen von derartigen Sackbohrungen mittels Senkerodieren ist allerdings nur bei elektrisch leitenden Materialen möglich. Im Bereich der Gasturbinen, insbesondere der Turbinenzwischengehäuse für Gasturbinen wird vermehrt der Einsatz von alternativen Werkstoffen, beispielsweise keramischen Faserverbundstoffen, untersucht, um Gewichtseinsparungen und Wirkungsgradverbesserungen zu erreichen verglichen mit herkömmlichen Metallbauteilen. Entsprechend kommen oben beschriebene herkömmliche Dichtungsanordnungen für Bauteile aus alternativen Werkstoffen nicht in Frage.

Aus der EP2851518A1 ist ein Bauteilsystem für eine Gasturbine mit Überlappungselementen bekannt.

Aufgabe der Erfindung ist es, eine Dichtungsanordnung bereitzustellen, welche die obigen Nachteile in Bezug auf alternative Materialien vermeidet.

Zur Lösung der Aufgabe wird vorgeschlagen, dass das erste Bauteil und das zweite Bauteil aus einem keramischen Faserverbundwerkstoff hergestellt sind, und dass das Dichtungselement wenigstens ein entlang des ersten Befestigungsabschnitts angeordnetes erstes Blechelement aufweist, das den Abstand vom ersten Befestigungsabschnitt zum zweiten Befestigungsabschnitt wenigstens teilweise überbrückt.

Das erste Blechelement dient dabei als eine Art Verlängerung des ersten Befestigungsabschnitts. Dabei verläuft das erste Blechelement im Wesentlichen entlang des ersten Überlappungsabschnitts, so dass ein zwischen dem ersten Bauteil und dem zweiten Bauteil vorhandener Zwischenraum durch das Blechelement wenigstens teilweise geschlossen werden kann. Das Vorsehen eines ersten Blechelements, das entlang des ersten Befestigungsabschnitts angeordnet ist ermöglicht die einfache Abdichtung des Zwischenraumes zwischen den beiden Bauteilen aus keramischen Faserverbundwerkstoffen (CMC).

Das erste Blechelement kann den Abstand vollständig überbrücken. Dabei kann ferner ein Eingriffsabschnitt des zweiten Befestigungsabschnitts verschiebbar im ersten Blechelement aufgenommen sein.

Das Dichtungselement kann auch wenigstens ein entlang des zweiten Befestigungsabschnitts angeordnetes zweites Blechelement aufweisen, das den Abstand zum ersten Befestigungsabschnitt teilweise überbrückt. Hierzu wird vorgeschlagen, dass zwischen dem ersten Blechelement und dem zweiten Blechelement ein Dichtkörper aufgenommen ist, der einen zwischen dem ersten Blechelement und dem zweiten Blechelement verbleibenden Restabstand überbrückt.

Bevorzugt ist das erste Blechelement oder/und das zweite Blechelement im Wesentlichen U-förmig ausgebildet. Die U-Form kann dabei so ausgestaltet sein, dass das betreffende Blechelement zwischen den beiden Schenkeln des U den jeweiligen ersten bzw. zweiten Befestigungsabschnitt aufnimmt. Ferner kann die U-Form so ausgestaltet sein, dass das betreffende Blechelement zum Überlappungsabschnitt hin bzw. zum Begrenzungsabschnitt hin geöffnet ist.

In der oben bereits beschriebenen Ausgestaltung, dass das erste Blechelement den Abstand zum zweiten Befestigungsabschnitt vollständig überbrückt, ist der Eingriffsabschnitt des zweiten Befestigungsabschnitts zwischen den beiden Schenkeln des U-förmigen ersten Blechelements aufgenommen.

In der ebenfalls schon beschriebenen Ausgestaltung, dass zwischen den ersten Blechelement und dem zweiten Blechelement ein Dichtkörper vorgesehen ist, ist der Körper an seinen den jeweiligen Befestigungsabschnitten zugewandten Enden zwischen den Schenkeln des U-förmigen ersten Blechelements und zwischen den Schenkeln des U-förmigen zweiten Blechelements aufgenommen.

Das erste Blechelement oder/und das zweite Blechelement kann bzw. können mittels Nietverbindungen mit dem betreffenden Befestigungsabschnitt verbunden sein. Hierzu sind im jeweiligen ersten bzw. zweiten Befestigungsabschnitt Öffnungen vorgesehen. Die Öffnungen können als kreisförmiges Loch oder als Langloch ausgeführt sein. Das erste oder/und das zweite Blechelement kann bzw. können aus einem beliebigen metallischen oder intermetallischen Werkstoff gefertigt sein. Es bzw. sie kann bzw. können somit auch einen anderen thermischen Ausdehnungskoeffizienten aufweisen als das erste oder/und das zweite Bauteil. Durch die als Langloch ausgebildeten Öffnungen können unterschiedliche thermische Ausdehnungen kompensiert werden.

Am ersten Überlappungsabschnitt oder/und am zweiten Überlappungsabschnitt kann eine Materialverdickung vorgesehen sein. Eine derartige Materialverdickung dient insbesondere dazu, dass im Bereich der Überlappung eine mechanische Nacharbeit an den CMC-Bauteilen möglich ist, ohne dass die Bauteile beschädigt werden. Die Materialverdickung dient also einer Art Ausgleich von Laminat-Toleranzen bei den beiden Bauteilen aus keramischen Faserverbundstoffen.

Das erste Bauteil und das zweite Bauteil können in einem Turbinenzwischengehäuse einer Gasturbine angeordnet sein, derart, dass der erste Begrenzungsabschnitt und der zweite Begrenzungsabschnitt einen Heißgas führenden Kanal begrenzen und dass der erste Befestigungsabschnitt und der zweite Befestigungsabschnitt mit Strukturelementen des Turbinenzwischengehäuses verbunden sind. Dabei weisen der erste und der zweite Befestigungsabschnitt vom Heißgas führenden Kanal weg, was oben mit dem Merkmal beschrieben worden ist, dass die Befestigungsabschnitte von den Begrenzungsabschnitten abstehen.

Die Erfindung betrifft auch ein Turbinenzwischengehäuse für eine Gasturbine, insbesondere Fluggasturbine, mit mehreren in Umfangsrichtung nebeneinander angeordneten und sich teilweise überlappenden Bauteilen, die einen Heißgas führenden Kanal begrenzen, und mit wenigstens einer oben beschriebenen Dichtungsanordnung, wobei das erste Bauteil und das zweite Bauteil jeweils in Umfangsrichtung benachbart sind.

Richtungsangaben wie "Axial-" bzw. "axial", "Radial-" bzw. "radial" und "Umfangs-" sind grundsätzlich auf die Maschinenachse der Gasturbine bezogen zu verstehen, sofern sich aus dem Kontext nicht explizit oder implizit etwas anderes ergibt.

Bei einem Turbinenzwischengehäuse können der erste Befestigungsabschnitt und der zweite Befestigungsabschnitt im Wesentlichen in Radialrichtung vom ersten Begrenzungsabschnitt bzw. vom zweiten Begrenzungsabschnitt abstehen.

Nachfolgend wird die Erfindung unter Bezugnahme auf die anliegenden Figuren beispielhaft und nicht einschränkend beschrieben.
Fig. 1 in einer vereinfachten und schematischen Ansicht eine Ausführungsform einer Dichtungsanordnung.
Fig. 2 zeigt in den Teilfiguren A) bis C) drei Querschnittdarstellungen entsprechend den Schnittlinien A-A, B-B und C-C der Fig. 1.
Fig. 3 zeigt in einer vereinfachten und schematischen Ansicht eine weitere Ausführungsform einer Dichtungsanordnung mit einem Dichtkörper.
Fig. 4 zeigt eine Schnittdarstellung entsprechend der Schnittlinie IV-IV der Fig. 3.

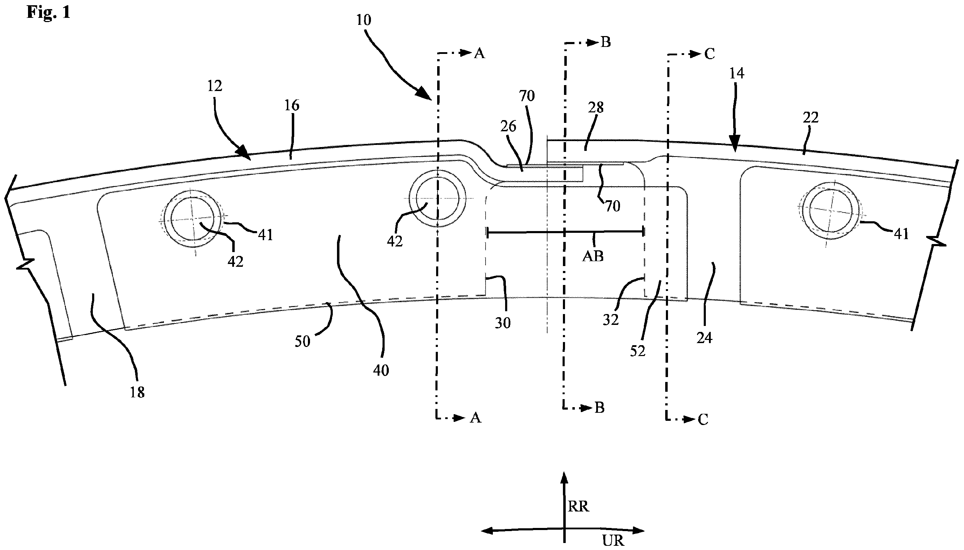

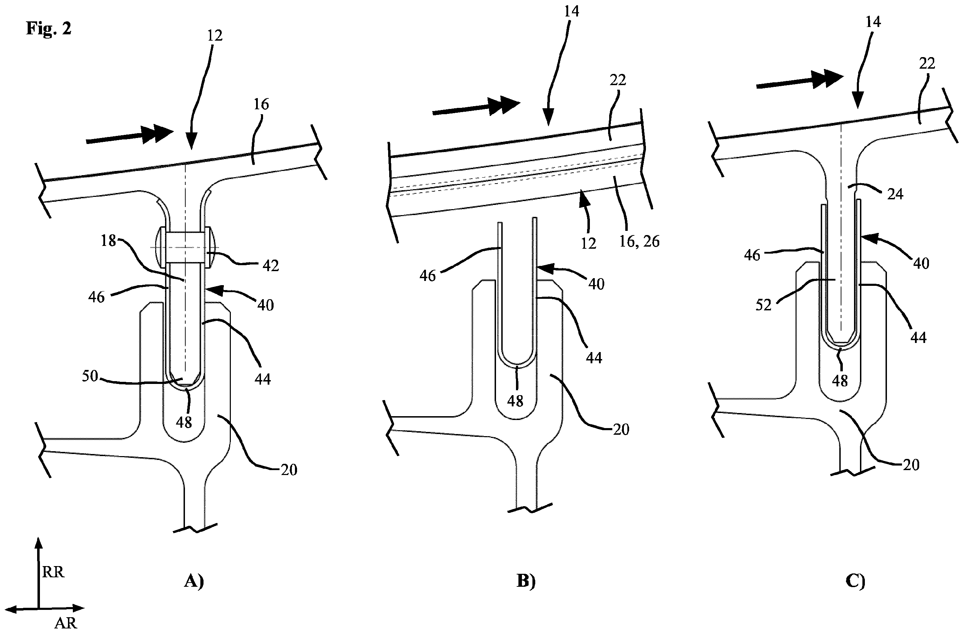

Eine Dichtungsanordnung 10 wird nachfolgend unter Bezugnahme auf die Fig. 1 und die zugehörigen Schnittdarstellungen der Fig. 2A) bis 2C) beschrieben. Fig. 1 zeigt in einer Frontansicht eine Dichtungsanordnung 10 mit einem ersten Bauteil 12 und einem zweiten Bauteil 14. Die beiden Bauteile 12, 14 können beispielsweise Teil eines hier nicht weiter dargestellten Turbinenzwischengehäuses einer Gasturbine, insbesondere Fluggasturbine sein. Beide Bauteile 12, 14 sind aus einem keramischen Faserverbundwerkstoff (CMC) hergestellt. Das erste Bauteil 12 weist einen Begrenzungsabschnitt 16 und einen vom Begrenzungsabschnitt 16 abstehenden Befestigungsabschnitt 18 auf. Der Befestigungsabschnitt 18 dient insbesondere dazu, dass das erste Bauteil 12 mit übergeordneten Strukturbauteilen 20 verbunden werden kann (Fig. 2). Der erste Befestigungsabschnitt 18 und der erste Begrenzungsabschnitt 16 sorgen dafür, dass das erste Bauteil 12 im Wesentlichen T-förmig ausgebildet ist. Auch das zweite Bauteil 14 weist einen Begrenzungsabschnitt 22 und einen vom Begrenzungsabschnitt 22 abstehenden Befestigungsabschnitt 24 auf. Der Befestigungsabschnitt 24 dient insbesondere dazu, dass das zweite Bauteil 14 mit übergeordneten Strukturbauteilen 20 verbunden werden kann (Fig. 2). Der zweite Befestigungsabschnitt 24 und der zweite Begrenzungsabschnitt 22 sorgen dafür, dass das zweite Bauteil 14 im Wesentlichen T-förmig ausgebildet ist.

Das erste Bauteil 12, insbesondere dessen Begrenzungsabschnitt 16 weist einen ersten Überlappungsabschnitt 26 auf. Der erste Überlappungsabschnitt 26 liegt bezogen auf den Rest des Begrenzungsabschnitts 16 auf einem anderen Niveau. Insbesondere liegt der erste Überlappungsabschnitt 26 in einer Höhenrichtung RR, die beispielsweise auch die Radialrichtung RR eine Gasturbine sein kann, weiter unten bzw. radial weiter innen als der übrige Begrenzungsabschnitt 16. Das zweite Bauteil 14, insbesondere dessen Begrenzungsabschnitt 22 weist einen zweiten Überlappungsabschnitt 28 auf. Der zweite Überlappungsabschnitt 28 liegt bezogen auf den Rest des zweiten Begrenzungsabschnitts 22 auf dem gleichen Niveau. Insbesondere liegt der zweite Überlappungsabschnitt 28 in einer Höhenrichtung RR, die beispielsweise auch die Radialrichtung RR eine Gasturbine sein kann, auf gleicher Höhe bzw. auf einem im Wesentlichen gleichen Radialabstand von einer nicht dargestellten Maschinenachse wie der übrige zweite Begrenzungsabschnitt 22.

Der erste Überlappungsabschnitt 26 und der zweite Überlappungsabschnitt 28 erstrecken sich in Längsrichtung UR, die beispielsweise auch die Umfangsrichtung UR einer Gasturbine sein kann, über den jeweiligen ersten Befestigungsabschnitt 18 bzw. den zweiten Befestigungsabschnitt 24 hinaus. Werden das erste Bauteil 12 und das zweite Bauteil 14 nebeneinander angeordnet, überlappen sie sich mit ihren jeweiligen Überlappungsabschnitten 26, 28. Zwischen einem ersten Ende 30 des ersten Befestigungsabschnitts 18 und einem zweiten Ende 32 des zweiten Befestigungsabschnitts 24 ist ein Abstand AB gebildet.

Bei der Dichtungsanordnung 10, wie sie in den Fig. 1 und 2 dargestellt ist, wird der Abstand AB zwischen dem ersten Bauteil 12 und dem zweiten Bauteil 14 durch ein erstes Blechelement 40 vollständig überbrückt. Das erste Blechelement 40 weist im Querschnitt ein im Wesentlichen U-förmiges Profil auf (Fig. 2). Das erste Blechelement 40 ist mittels Nietverbindungen 42 mit dem ersten Bauteil 12, insbesondere mit dessen Befestigungsabschnitt 18 verbunden. Anders ausgedrückt kann auch gesagt werden, dass der erste Befestigungsabschnitt 18 von dem Blechelement 40 umgeben oder eingefasst ist. Das U-förmige Profil des ersten Blechelements 40 ist dabei so ausgebildet, dass sich die beiden Schenkel 44, 46 des U entlang des Befestigungsabschnitts erstrecken. Der Bogen 48 des U befindet sich an einer Unterseite 50 bzw. eine radialen Innenseite 50 des ersten Bauteils 12. Das erste Blechelement 40 weist also ein Profil auf, das nach oben hin bzw. nach radial außen hin bzw. zum Begrenzungsabschnitt 16 hin geöffnet ist.

Das zweite Bauteil 14, insbesondere dessen Befestigungsabschnitt 24 ist verschiebbar im ersten Blechelement 40 aufgenommen. Anderes ausgedrückt ist ein Eingriffsabschnitt 52 des zweiten Befestigungsabschnitts 24 im ersten Blechelement 40 aufgenommen. Durch die hier dargestellte Dichtungsanordnung 10 können die beiden Bauteile 12, 14 sich relativ zueinander bewegen, insbesondere können thermische Ausdehnungen kompensiert werden, wobei durch die beiden Überlappungsbereiche 26, 28 und das erste Blechelement 40 der Übergang vom ersten Bauteil 12 zum zweiten Bauteil 14 im Wesentlichen abgedichtet ist.

Eine solche Abdichtung ist insbesondere von Bedeutung, wenn das erste Bauteil 12 und das zweite Bauteil 14 Teil eines Turbinenzwischengehäuses einer Gasturbine sind. In einem solchen Fall begrenzen die Begrenzungsabschnitte 16, 22 einen Heißgas führenden Ringkanal. Die Strömungsrichtung von Heißgas ist in der Fig. 2 durch einen Doppelpfeil vereinfacht angedeutet. Auf der vom Heißgas führenden Kanal abgewandten Seite, die sich im vorliegenden Beispiel radial innen befindet, treten ebenfalls Fluidströmungen auf. Diese Fluidströmungen können durch das Blechelement 40 im Bereich des Übergangs vom ersten Bauteil zum zweiten Bauteil 14, die mit dem Abstand AB zueinander angeordnet sind, beeinflusst bzw. reduziert werden. Das erste Blechelement 40 bildet also für diese Fluidströmungen ein Dichtelement. Durch die hier vorgestellte Dichtungsanordnung 10 kann also eine Abdichtung des Heißgas führenden Kanals erreicht werden und an der Übergangsstelle zwischen dem ersten Bauteil 12 und dem zweiten Bauteil 14 kann auch eine Abdichtung für andere Fluidströmungen erreicht werden. Eine in Fig. 1 dargestellte Dichtungsanordnung 10 kann in einem Turbinenzwischengehäuse mehrfach vorgesehen sein, wobei mehrere Dichtungsanordnungen entlang dem Umfang verteilt angeordnet sind.

Das erste Blechelement 40 kann aus einem beliebigen metallischen oder intermetallischen Werkstoff gefertigt sein. Es kann somit auch einen anderen thermischen Ausdehnungskoeffizienten aufweisen als das erste und das zweite Bauteil 12, 14. Um eventuelle unterschiedliche Ausdehnungen von erstem Blechelement 40 und erstem bzw. zweitem Bauteil 12, 14 zu kompensieren, können im ersten bzw. zweiten Bauteil 12, 14 langlochförmige Öffnungen 41 (gestrichelt dargestellt) vorgesehen sein. Das erste Bauteil 12 und das zweite Bauteil 14 können identisch zueinander ausgebildet sein, wobei die umfangsseitigen Enden eines Bauteils 12, 14 unterschiedlich zueinander ausgebildet sind, so wie dies oben beschrieben worden ist.

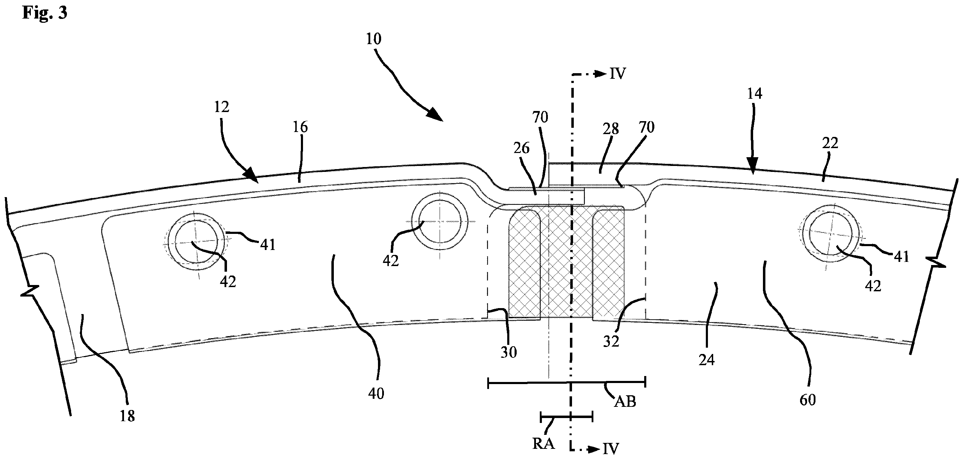

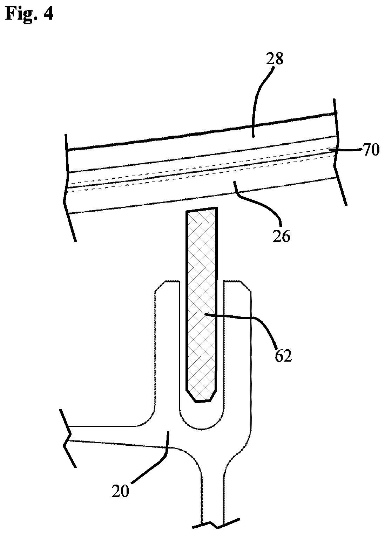

In Fig. 3 und 4 ist eine Variation der Dichtungsanordnung 10 dargestellt, wobei die Fig. 4 eine Schnittdarstellung entsprechen der Schnittlinie IV-IV der Fig. 3 ist. Das erste Blechelement 40 überbrückt den Abstand AB zwischen den beiden Bauteilen 12, 14 bzw. ihren Befestigungsabschnitten 18, 24 nur teilweise. Zusätzlich weist das zweite Bauteil 14 ein zweites Blechelement 60 auf, das den Abstand AB aus der anderen Richtung teilweise überbrückt. Die oben für das erste Blechelement 40 beschriebenen Eigenschaften bezüglich Profil in U-Form und Befestigung mittels Nieten 42 treffen auch für das zweite Blechelement 60 zu und wird hier nicht noch einmal wiederholt. Zwischen den ersten Blechelement 40 und dem zweiten Blechelement 60, die beiden den Abstand AB nur teilweise überbrücken, verbleibt ein Restabstand RA. Um den Restabstand RA zu überbrücken bzw. abzudichten, ist ein Dichtkörper 62 (schraffiert dargestellt) vorgesehen. Der Dichtkörper 62 ist sowohl im ersten Blechelement 40 als auch im zweiten Blechelement 60 aufgenommen bzw. gelagert. Der Dichtkörper 62 kann aus einem geeigneten Material hergestellt sein, insbesondere kann er aus einem keramischen Material oder aus einem Metall hergestellt sein. Auch bei dieser Variation der Dichtungsanordnung 10 sind die Bauteile 12, 14 relativ zueinander verschiebbar, insbesondere sind sie auch relativ verschiebbar zum Dichtkörper 62, der zwischen ihnen aufgenommen ist.

Im Bereich der Überlappungsabschnitte 26, 28 können das erste Bauteil 12 oder/und das zweite Bauteil 14 eine Materialverdickung 70 aufweisen. In den vorliegenden Beispielen der Fig. 1 bis 4 ist jeweils an jedem Überlappungsabschnitt 26, 28 eine Materialverdickung 70 vereinfacht und schematisch dargestellt. Die Materialverdickung an den CMC-Bauteilen 12, 14 dient insbesondere dazu, Toleranzen ausgleichen zu können. Dabei kann im Bereich der Materialverdickungen 70 bei Bedarf Material abgetragen werden, ohne dass eine Beschädigung der Struktur des jeweiligen Bauteils 12, 14 in Kauf genommen werden muss. Durch die Materialverdickungen 70 und die Möglichkeit, diese abzutragen, können die Überlappungen passend ausgebildet werden, so dass eine optimale Dichtigkeit erreicht werden kann.

Die Bauteile 12, 14 sind in den Figuren 1 und 3 als gekrümmte Bauteile dargestellt, die Teil einer im Wesentlichen ringförmigen Gesamtstruktur eines Turbinenzwischengehäuses sind. Eine solche Dichtungsanordnung ist aber nicht auf die Verbindung von gekrümmten Baute i-len beschränkt. Sie kann vielmehr auch bei geraden Bauteilen verwendet werden, bei denen eine Abdichtung erreicht werden muss bei gleichzeitiger Verschiebbarkeit der Bauteile zueinander.

### Bezugszeichenliste

- 10: Dichtungsanordnung
- 12: erstes Bauteil
- 14: zweites Bauteil
- 16: erster Begrenzungsabschnitt
- 18: erster Befestigungsabschnitt
- 20: Strukturbauteil
- 22: zweiter Begrenzungsabschnitt
- 24: zweiter Befestigungsabschnitt
- 26: erster Überlappungsabschnitt
- 28: zweiter Überlappungsabschnitt
- 30: erstes Ende
- 32: zweites Ende
- 40: erstes Blechelement
- 41: langlochförmige Öffnung
- 42: Nietverbindung
- 44: Schenkel
- 46: Schenkel
- 48: Bogen
- 50: Unterseite
- 52: Eingriffsabschnitt
- 60: zweites Blechelement
- 62: Dichtkörper
- 70: Materialverdickung

## Patentansprüche

1. Dichtungsanordnung (10) für eine Gasturbine umfassend:
ein erstes Bauteil (12) und ein zweites Bauteil (14), wobei das erste Bauteil (12) einen ersten Begrenzungsabschnitt (16) mit einem ersten Überlappungsabschnitt (26) aufweist und einen mit dem Begrenzungsabschnitt (16) verbundenen und von diesem abstehenden ersten Befestigungsabschnitt (18), wobei das zweite Bauteil (14) einen zweiten Begrenzungsabschnitt (22) mit einem zweiten Überlappungsabschnitt (28) aufweist und einen mit dem Begrenzungsabschnitt (22) verbundenen und von diesem abstehenden zweiten Befestigungsabschnitt (24), wobei der erste Überlappungsabschnitt (26) und der zweite Überlappungsabschnitt (28) wenigstens teilweise überlappend angeordnet sind, derart dass der erste Begrenzungsabschnitt (16) und der zweite Begrenzungsabschnitt (22) eine im Wesentlichen durchgängige Begrenzungsfläche bilden, wobei zwischen dem ersten Befestigungsabschnitt (18) und dem zweiten Befestigungsabschnitt (24) ein Abstand (AB) vorgesehen ist, der durch wenigstens ein Dichtungselement (40, 60) wenigstens teilweise abgedichtet wird,
**dadurch gekennzeichnet, dass** das erste Bauteil (12) und das zweite Bauteil (14) aus einem keramischen Faserverbundwerkstoff hergestellt sind, und dass das Dichtungselement (40, 60) wenigstens ein entlang des ersten Befestigungsabschnitts (18) angeordnetes erstes Blechelement (40) aufweist, das den Abstand (AB) vom ersten Befestigungsabschnitt (18) zum zweiten Befestigungsabschnitt (24) wenigstens teilweise überbrückt.

2. Dichtungsanordnung nach Anspruch 1, **dadurch gekennzeichnet, dass** das erste Blechelement (40) den Abstand (AB) vollständig überbrückt.

3. Dichtungselement nach Anspruch 2, **dadurch gekennzeichnet, dass** ein Eingriffsabschnitt (52) des zweiten Befestigungsabschnitts (24) verschiebbar im ersten Blechelement (40) aufgenommen ist.

4. Dichtungsanordnung nach Anspruch 1, **dadurch gekennzeichnet, dass** das Dichtungselement wenigstens ein entlang des zweiten Befestigungsabschnitts (24) angeordnetes zweites Blechelement (60) aufweist, das den Abstand (AB) zum ersten Befestigungsabschnitt (18) teilweise überbrückt.

5. Dichtungsanordnung nach Anspruch 4, **dadurch gekennzeichnet, dass** zwischen dem ersten Blechelement (40) und dem zweiten Blechelement (60) ein Dichtkörper (62) aufgenommen ist, der einen zwischen dem ersten Blechelement (40) und dem zweiten Blechelement (60) verbleibenden Restabstand (RA) überbrückt.

6. Dichtungselement nach Anspruch 4 oder 5, **dadurch gekennzeichnet, dass** das zweite Blechelement (60) im Wesentlichen U-förmig ausgebildet ist

7. Dichtungsanordnung nach einem der vorhergehenden Ansprüche, **dadurch gekennzeichnet, dass** das erste Blechelement (40) im Wesentlichen U-förmig ausgebildet ist.

8. Dichtungsanordnung nach einem der vorhergehenden Ansprüche, **dadurch gekennzeichnet, dass** das erste Blechelement (40) oder/und das zweite Blechelement (60) mittels Nietverbindungen (42) mit dem betreffenden Befestigungsabschnitt (18, 24) verbunden ist bzw. sind.

9. Dichtungsanordnung nach einem der vorhergehenden Ansprüche, **dadurch gekennzeichnet, dass** am ersten Überlappungsabschnitt (26) oder/und am zweiten Überlappungsabschnitt (28) eine Materialverdickung (70) vorgesehen ist.

10. Dichtungsanordnung nach einem der vorhergehenden Ansprüche, **dadurch gekennzeichnet, dass** das erste Bauteil (12) und das zweite Bauteil (14) in einem Turbinenzwischengehäuse einer Gasturbine angeordnet sind, derart, dass der erste Begrenzungsabschnitt (16) und der zweite Begrenzungsabschnitt (22) einen Heißgas führenden Kanal begrenzen und dass der erste Befestigungsabschnitt (18) und der zweite Befestigungsabschnitt (24) mit Strukturelementen (20) des Turbinenzwischengehäuses verbunden sind.

11. Turbinenzwischengehäuse für eine Gasturbine, insbesondere Fluggasturbine, mit mehreren in Umfangsrichtung nebeneinander angeordneten und sich teilweise überlappenden Bauteilen (12, 14), die einen Heißgas führenden Kanal begrenzen, und mit wenigstens einer Dichtungsanordnung (10) nach einem der vorhergehenden Ansprüche, wobei das erste Bauteil (12) und das zweite Bauteil (14) jeweils in Umfangsrichtung benachbart sind.

12. Turbinenzwischengehäuse nach Anspruch 11, **dadurch gekennzeichnet, dass** der erste Befestigungsabschnitt (18) und der zweite Befestigungsabschnitt (24) im Wesentlichen in Radialrichtung (RR) vom ersten Begrenzungsabschnitt (16) bzw. vom zweiten Begrenzungsabschnitt (22) abstehen.

## Claims

1. Sealing arrangement (10) for a gas turbine, comprising:
a first component (12) and a second component (14), with the first component (12) having a first boundary section (16) with a first overlap section (26) and a first fixation section (18) connected to the boundary section (16) and held out therefrom, with the second component (14) having a second boundary section (22) with a second overlap section (28) and a second fixation section (24) connected to and held out from the boundary section (22), the first overlap section (26) and the second overlap section (28) being configured so that they overlap at least partially, such that the first boundary section (16) and the second boundary section (22) form a substantially continuous boundary surface, where a distance (AB), which is at least partially sealed by at least one sealing element (40, 60), is provided between the first attachment section (18) and the second attachment section (24), **characterized in that** the first component (12) and the second component (14) are made of a fiber reinforced composite material, and that the sealing element (40, 60) comprises at least one first sheet metal element (40) arranged along the first fixation section (18), which at least partially bridges the distance (AB) from the first fixation section (18) to the second fixation section (24).

2. Sealing arrangement according to claim 1, **characterized in that** the first sheet metal element (40) completely bridges the distance (AB).

3. Sealing element according to claim 2, **characterized in that** an engaging portion (52) of the second fixation section (24) is received in the first sheet metal member (40) in a slidable way.

4. Sealing arrangement according to claim 1, **characterized in that** the sealing element has at least one second sheet-metal element (60) located along the second fixation section (24), which partially bridges the distance (AB) to the first fixation section (18).

5. Sealing arrangement according to claim 4, **characterized in that** a sealing body (62) is accommodated between the first sheet-metal element (40) and the second sheet-metal element (60), bridging a remaining distance (RA) between the first sheet-metal element (40) and the second sheet-metal element (60).

6. Sealing element according to either claim 4 or claim 5, **characterized in that** the second sheet metal element (60) is substantially U-shaped.

7. Sealing arrangement according to any of the preceding claims, **characterized in that** the first sheet metal element (40) is substantially U-shaped.

8. Sealing arrangement according to any of the preceding claims, **characterized in that** the first sheet metal element (40) and/or the second sheet metal element (60) are connected to the respective attachment section (18, 24) by means of rivet connections (42).

9. Sealing arrangement according to any of the preceding claims, **characterized in that** a thickening of the material (70) is provided on the first overlap section (26) and/or on the second overlap section (28).

10. Sealing arrangement according to any of the preceding claims, **characterized in that** the first component (12) and the second component (14) are located in the intermediate turbine housing of a gas turbine, such that the first boundary section (16) and the second boundary section (22) enclose a channel carrying hot gas, and **in that** the first fixation section (18) and the second fixation section (24) are connected to structural elements (20) of the intermediate turbine housing.

11. Intermediate Turbine housing for a gas turbine, in particular an aircraft gas turbine, with numerous components (12, 14) defining a channel carrying hot gas disposed circumferentially adjacent to each other and partially overlapping , and with at least one sealing arrangement (10) according to one of the preceding claims, wherein the first component (12) and the second component (14) being adjacent to each other in the circumferential direction.

12. Intermediate turbine housing according to claim 11, **characterized in that** the first fixation section (18) and the second fixation section (24) project substantially in the radial direction (RR) from the first boundary section (16) and the second boundary section (22), respectively.

## Revendications

1. Agencement d'étanchéité (10) pour une turbine à gaz, comprenant :
un premier élément (12) et un second élément (14), le premier élément (12) comportant une première section de délimitation (16) dotée d'une première section de chevauchement (26) et une première section de fixation (18) reliée à la section de délimitation (16) et faisant saillie à partir de celle-ci, le second élément (14) comprenant une seconde section de délimitation (22) comportant une seconde section de chevauchement (28) et une seconde section de fixation (24) reliée à la section de délimitation (22) et faisant saillie à partir de celle-ci, la première section de chevauchement (26) et la seconde section de chevauchement (28) étant au moins partiellement superposées de sorte que la première section de délimitation (16) et la seconde section de délimitation (22) forment une surface de délimitation sensiblement continue, une distance (AB) étant prévue entre la première section de fixation (18) et la seconde section de fixation (24), laquelle distance est au moins partiellement étanche grâce à au moins un élément d'étanchéité (40, 60),
**caractérisé en ce que** le premier composant (12) et le second composant (14) sont constitués d'un matériau composite fibreux céramique, et **en ce que** l'élément d'étanchéité (40, 60) comporte au moins un premier élément en tôle (40) qui est disposé le long de la première section de fixation (18) et qui couvre au moins partiellement la distance (AB) entre la première section de fixation (18) et la seconde section de fixation (24).

2. Agencement d'étanchéité selon la revendication 1, **caractérisé en ce que** le premier élément en tôle (40) couvre complètement la distance (AB).

3. Agencement d'étanchéité selon la revendication 2, **caractérisé en ce qu'**une section de prise (52) de la seconde section de fixation (24) est reçue de manière coulissante dans le premier élément en tôle (40).

4. Dispositif d'étanchéité selon la revendication 1, **caractérisé en ce que** l'élément d'étanchéité comprend au moins un second élément en tôle (60) disposé le long de la seconde section de fixation (24) et reliant partiellement la distance (AB) à la première section de fixation (18).

5. Dispositif d'étanchéité selon la revendication 4, **caractérisé en ce qu'**un corps d'étanchéité (62) est reçu entre le premier élément en tôle (40) et le second élément en tôle (60), lequel corps d'étanchéité couvre une distance résiduelle (RA) restante entre le premier élément en tôle (40) et le second élément en tôle (60).

6. Agencement d'étanchéité selon la revendication 4 ou 5, **caractérisé en ce que** le second élément en tôle (60) est réalisé sensiblement en forme de U

7. Dispositif d'étanchéité selon l'une des revendications précédentes, **caractérisé en ce que** le premier élément en tôle (40) est réalisé sensiblement en forme de U.

8. Dispositif d'étanchéité selon l'une des revendications précédentes, **caractérisé en ce que** le premier élément en tôle (40) et/ou le second élément en tôle (60) est ou sont relié(s) à la section de fixation respective (18, 24) au moyen de liaisons rivetées (42).

9. Dispositif d'étanchéité selon l'une des revendications précédentes, **caractérisé en ce qu'**un épaississement de matériau (70) est prévu sur la première section de chevauchement (26) et/ou sur la seconde section de chevauchement (28).

10. Dispositif d'étanchéité selon l'une des revendications précédentes, **caractérisé en ce que** le premier composant (12) et le second composant (14) sont disposés dans un carter intermédiaire de turbine d'une turbine à gaz de sorte que la première section de délimitation (16) et la seconde section de délimitation (22) définissent un passage de transport de gaz chaud et **en ce que** la première partie de fixation (18) et la seconde section de fixation (24) sont reliées aux éléments structurels (20) du carter intermédiaire de turbine.

11. Carter intermédiaire de turbine pour une turbine à gaz, en particulier une turbine à gaz d'avion, comportant plusieurs composants (12, 14) disposés les uns à côté des autres dans la direction périphérique et se chevauchant partiellement, lesquels composants délimitent un conduit transportant du gaz chaud, et comportant au moins un agencement d'étanchéité (10) selon l'une des revendications précédentes, ledit premier composant (12) et ledit second composant (14) étant chacun adjacents dans la direction circonférentielle.

12. Carter intermédiaire de turbine selon la revendication 11, **caractérisé en ce que** la première section de fixation (18) et la seconde section de fixation (24) font sensiblement saillie, dans la direction radiale (RR), à partir de la première section de délimitation (16) et/ou de la seconde section de délimitation (22).
